(19) Europäisches Patentamt
European Patent Office
Office européen des brevets

(11) **EP 4 648 505 A1**

(12) **EUROPEAN PATENT APPLICATION**

(43) Date of publication:
**12.11.2025 Bulletin 2025/46**

(21) Application number: **25169117.6**

(22) Date of filing: **08.04.2025**

(51) International Patent Classification (IPC):
**H04W 68/02** (2009.01)

(52) Cooperative Patent Classification (CPC):
**H04W 68/02; H04W 68/025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.05.2024 US 202463643982 P
02.04.2025 US 202519097878**

(71) Applicant: **Acer Incorporated
New Taipei City 221 (TW)**

(72) Inventor: **Lin, Jung-Mao
221 New Taipei City (TW)**

(74) Representative: **Straus, Alexander
2K Patentanwälte - München
Bajuwarenring 14
82041 Oberhaching (DE)**

(54) **METHOD AND COMMUNICATION DEVICE FOR HANDLING PAGING TRANSMISSIONS**

(57) A method for a communication device (14, 20) handling paging transmissions includes: receiving an enhanced paging region, EPR, configuration from a network (12, 20), wherein the EPR configuration comprises an EPR cycle and a paging monitor window, PMW, configuration (302); determining at least one PMW in the EPR cycle according to the PMW configuration (304); receiving at least one paging downlink, DL, control information, DCI, from the network (12, 20) in the at least one PMW (306); and receiving at least one first paging message, PM, from the network (12, 20) according to the at least one paging DCI (308).

FIG. 3

**Description**

Field of the Invention

The present invention relates to methods and a communication device used in a wireless communication system, and more particularly, to methods and a communication device for handling paging transmissions.

Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - the 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

A paging transmission is performed in a paging frame (PF) within a default paging cycle (DPC). A communication device and a network suffer from an energy consumption, since the communication device and the network wake up frequently (e.g., once in every DPC) to perform paging transmissions. Thus, how to handle paging transmissions to save energy is an important problem to be solved.

Summary of the Invention

This in mind, the present invention aims at providing methods and a communication device for handling paging transmissions to solve the abovementioned problem.

This is achieved by methods and a communication device for handling paging transmissions according to the independent claims, respectively. The dependent claims pertain to corresponding further developments and improvements.

As will be seen more clearly from the detailed description following below, a claimed method for a communication device handling paging transmissions comprises: receiving an enhanced paging region (EPR) configuration from a network, wherein the EPR configuration comprises an EPR cycle and a paging monitor window (PMW) configuration; determining at least one PMW in the EPR cycle according to the PMW configuration; receiving at least one paging downlink (DL) control information (DCI) from the network in the at least one PMW; and receiving at least one first paging message (PM) from the network according to the at least one paging DCI.

A claimed communication device for handling paging transmissions comprises: at least one storage device; and at least one processing circuit, coupled to the at least one storage device, wherein the at least one storage device is configured to store instructions, and the at least one processing circuit is configured to execute the instructions of: receiving an enhanced paging region (EPR) configuration from a network, wherein the EPR configuration comprises an EPR cycle and a paging monitor window (PMW) configuration; determining at least one PMW in the EPR cycle according to the PMW configuration; receiving at least one paging downlink (DL) control information (DCI) from the network in the at least one PMW; and receiving at least one first paging message (PM) from the network according to the at least one paging DCI.

A claimed method for a network handling paging transmissions comprises: transmitting an enhanced paging region (EPR) configuration to a communication device, wherein the EPR configuration comprises an EPR cycle and a paging monitor window (PMW) configuration; transmitting at least one paging downlink (DL) control information (DCI) to the communication device in at least one default paging cycle (DPC), wherein the at least one DPC overlaps with at least one PMW which is determined according to the PMW configuration; and transmitting at least one first paging message (PM) to the communication device according to the at least one paging DCI.

Brief Description of the Drawings

In the following, the invention is further illustrated by way of example, taking reference to the following drawings.

FIG. 1 is a schematic diagram of a wireless communication system according to an example of the present invention.

FIG. 2 is a schematic diagram of a communication device according to an example of the present invention.

FIG. 3 is a flowchart of a process according to an example of the present invention.

FIG. 4 is a flowchart of a process according to an example of the present invention.

FIG. 5 is a schematic diagram of a paging DCI according to an example of the present invention.

FIG. 6 is a flowchart of a process according to an example of the present invention.

FIG. 7 is a schematic diagram of a paging DCI according to an example of the present invention.

FIG. 8 is a flowchart of a process according to an example of the present invention.

FIG. 9 is a schematic diagram of a paging DCI according to an example of the present invention.

FIG. 10 is a schematic diagram of a paging DCI according to an example of the present invention.

FIG. 11 is a schematic diagram of a paging DCI according to an example of the present invention.

FIG. 12 is a schematic diagram of a paging DCI according to an example of the present invention.

FIG. 13 is a sequence diagram of a process according to an example of the present invention.

FIG. 14 is a sequence diagram of a process according to an example of the present invention.

FIG. 15 is a schematic diagram of a relation between a DPC and a PMW according to an example of the present invention.

FIG. 16 is a schematic diagram of a relation between a DPC and a PMW according to an example of the present invention.

Detailed Description

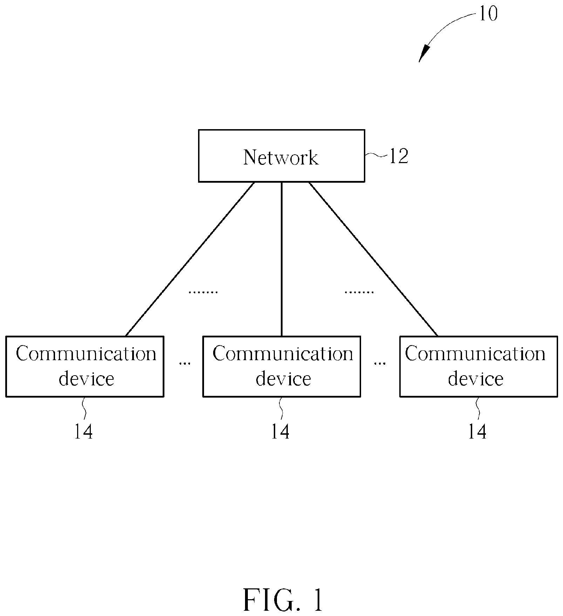

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the gNB or the 5G BS of network 12 may be a transmission reception point (TRP). In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

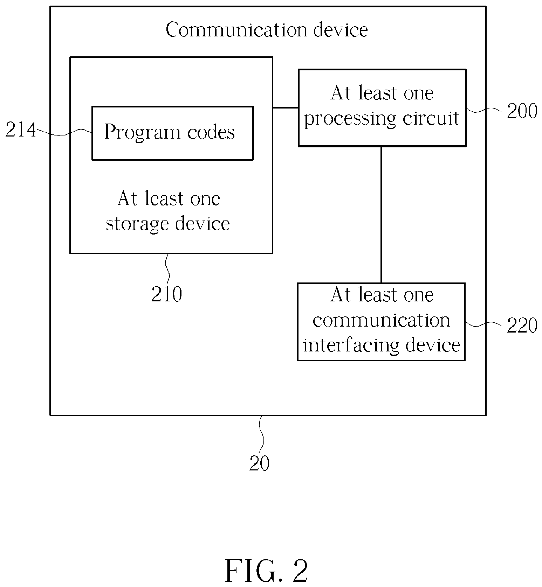

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

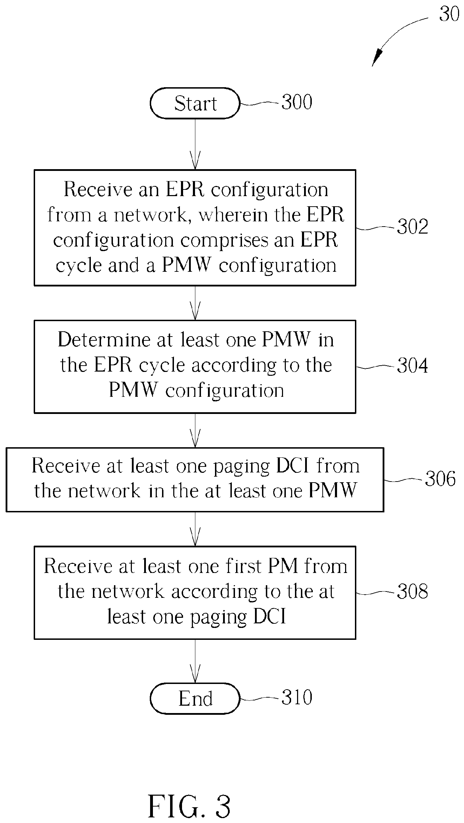

FIG. 3 is a flowchart of a process 30 according to an example of the present invention. The process 30 may be utilized in a communication device (e.g., a communication device 14 in FIG. 1 or the communication device 20 in FIG. 2), to handle paging transmissions. The process 30 may be compiled into the program codes 214 and includes the following steps:

Step 300:  Start.
Step 302:  Receive an enhanced paging region (EPR) configuration from a network, wherein the EPR configuration comprises an EPR cycle and a paging monitor window (PMW) configuration.
Step 304:  Determine at least one PMW in the EPR cycle according to the PMW configuration.
Step 306:  Receive at least one paging downlink (DL) control information (DCI) from the network in the at least one PMW.
Step 308:  Receive at least one first paging message (PM) from the network according to the at least one paging DCI.
Step 310:  End.

According to the process 30, the communication device receives an EPR configuration from a network. The EPR configuration comprises an EPR cycle and a PMW configuration. The communication device determines at least one PMW in the EPR cycle according to the PMW configuration. The communication device receives (e.g., monitors) at least one paging DCI from the network in the at least one PMW, and receives (e.g., monitors) at least one first PM from the network according to the at least one paging DCI. That is, the communication device finds out the at least one PMW, before receiving (e.g., monitoring) the at least one paging DCI. The communication device disables receiving (e.g., monitoring) the at least one paging DCI outside the at least one PMW in the EPR cycle. Thus, the communication device performs the paging monitoring in specific radio frame(s) (RF) within the at least one PMW to save energy of the communication device.

Realization of the process 30 is not limited to the above description. The following examples may be applied to realize the process 30.

In one example, the EPR cycle corresponds to an EPR. In one example, the EPR comprises a plurality of RFs. In one example, the plurality of RFs comprise one or more paging frames (PFs). In one example, the EPR comprises a starting point of a PF. In one example, a PMW (e.g., one of the at least one PMW) comprises at least one first PF.

In one example, the PMW configuration comprises time location information. In one example, the time location information comprises a starting point and a length for the PMW. In one example, the Step 304 comprises: the communication device determines the at least one PMW in the EPR cycle according to the time location information.

In one example, the EPR cycle is a multiple of a default paging cycle (DPC). In one example, the PMW configuration comprises a PMW indicator indicating at least one DPC. In one example, the Step 304 comprises: the communication device determines the at least one DPC in the EPR cycle as the at least one PMW according to the PMW indicator. In one example, the PMW indicator comprises at least one of an index number and a bit map. In one example, the index number indicates the at least one DPC. In one example, the bit map comprises a plurality of bits. In one example, the plurality of bits corresponds to a plurality of DPCs in the EPR cycle, respectively. In one example, a bit with a first value (e.g., 1) in the bit map represents that a corresponding DPC is a PMW. In one example, a bit with a second value (e.g., 0) in the bit map represents that a corresponding DPC is not a PMW.

In one example, the communication device receives at least one EPR cycle parameter from the network. The at least one EPR cycle parameter may be comprised in the EPR configuration. In one example, the communication device determines the index number according to the at least one EPR cycle parameter. In one example, the communication device determines the index number according to an equation (Eq. 1) or an equation (Eq. 2). The equation (Eq. 1) and the equation (Eq. 2) are expressed as follows:

$$n = QUOTIENT\{(SFN \bmod K), T\} + 1 \qquad \text{(Eq. 1)}$$

$$n = QUOTIENT\{((SFN + offset) \bmod K), T\} + 1 \qquad \text{(Eq. 2)}$$

Wherein $n$ is the index number, $QUOTIENT\{\cdot\}$ is a quotient rule, $SFN$ is an index of an RF, $offset$ is an offset for a PMW, $K$ is a number of RFs in the EPR cycle and $T$ is a number of RFs in the DPC.

In one example, the communication device determines at least one second PF within a PMW (e.g., one of the at least one PMW) according to an equation (Eq. 3). The equation (Eq. 3) is expressed as follows:

$$(SFN + offset) \bmod T = (T \operatorname{div} N) \times (ID_{CD} \bmod N) \qquad \text{(Eq. 3)}$$

wherein $SFN$ is an index of an RF, $offset$ is an offset for the PMW, $T$ is a number of RFs in a DPC, $N$ is a number of PFs in the DPC and $ID_{CD}$ is an ID of the communication device. In one example, the communication device receives (e.g., monitors) a paging DCI (e.g., one of the at least one paging DCI) in the at least one second PF within the PMW.

In one example, the PMW configuration comprises a coefficient. In one example, the Step 304 comprises: the communication device determines the at least one first PF in the EPR cycle as a PMW according to an equation (Eq. 4). The equation (Eq. 4) is expressed as follows:

$$(SFN + offset) \bmod (m \times T) = (T \operatorname{div} N) \times (ID_{CD} \bmod N) \qquad \text{(Eq. 4)}$$

wherein $SFN$ is an index of an RF, $offset$ is an offset for a PMW, m is the coefficient, $T$ is a number of RFs in the DPC, $N$ is a number of PFs in the DPC and $ID_{CD}$ is an ID of the communication device. That is, the EPR cycle becomes greater, when the communication device applies the equation (Eq. 4) instead of a legacy equation (e.g., the equation (Eq. 3)) to determine the at least one first PF. In one example, the communication device disables receiving (e.g., monitoring) the at least one paging DCI in RFs which do not fulfill the equation (Eq. 4).

In one example, one of the at least one paging DCI comprises a short message and a first resource assignment of a PM (e.g., a default PM). In one example, the at least one first PM comprises the PM. In one example, the PM comprises at least one of a paging record list (e.g., a default paging record list), an extended paging record list, an additional paging record list, a first paging record list indicator for the extended paging record list, a second paging record list indicator for the additional paging record list and at least one second resource assignment of at least one second PM (e.g., additional PM(s)). In one example, the one of the at least one paging DCI comprises at least one of the at least one second resource assignment of the at least one second PM, the first paging record list indicator for the extended paging record list and the second paging record list indicator for the additional paging record list. In one example, the at least one first PM comprises the at least one second PM. In one example, the at least one second PM comprises at least one paging record list.

In one example, the short message comprises at least one of a system information change indicator and at least one emergency information indication. In one example, a paging record list (e.g., the default paging record list, the extended paging record list and/or the additional paging record list) corresponds to at least one communication device that need to be paged by the network. In one example, the first paging record list indicator indicates that the PM comprises the extended paging record list. In one example, a maximum size of the extended paging record list is greater than that of the paging record list. In one example, the second paging record list indicator indicates that the PM comprises the additional paging record list. In one example, a maximum size of the additional paging record list is not smaller than that of the paging record list.

In one example, the communication device is assigned at least one resource for the at least one second PM according to the one of the at least one paging DCI. In one example, the communication device is assigned the at least one resource for the at least one second PM according to the PM.

In one example, the communication device monitors the one of the at least one paging DCI at a configured paging opportunity (PO). In one example, the communication device monitors the one of the at least one paging DCI at a next configured PO, when (e.g., if) the communication device does not receive the one of the at least one paging DCI at the configured PO. In one example, the communication device monitors the one of the at least one paging DCI at the next configured PO, when (e.g., if) the paging record list and the at least one paging record list do not comprise the ID of the communication device. In one example, the communication device monitors the one of the at least one paging DCI at the next configured PO, when (e.g., if) the PM does not comprise the at least one second resource assignment. In one example, the communication device monitors the one of the at least one paging DCI at the next configured PO, when (e.g., if) the at least one paging record list does not comprise the ID of the communication device.

In one example, the communication device receives the PM and the at least one second PM according to the first resource assignment and the at least one second resource assignment in the one of the at least one paging DCI, when (e.g., if) the communication device receives the one of the at least one paging DCI at the configured PO. In one example, the communication device receives the PM according to the first resource assignment in the one of the at least one paging DCI, when (e.g., if) the communication device receives the one of the at least one paging DCI at the configured PO. In one example, the communication device receives the at least one second PM according to the at least one second resource assignment, when (e.g., if) the PM comprises the at least one second resource assignment.

In one example, the communication device determines whether the paging record list in the PM and the at least one paging record list in the at least one second PM comprise the ID of the communication device. In one example, the communication device determines whether the paging record list in the PM comprises the ID of the communication device. In one example, the communication device determines whether the at least one paging record list in the at least one second PM comprises the ID of the communication device.

In one example, the communication device determines whether the PM comprises the at least one second resource assignment, when (e.g., if) the paging record list does not comprise the ID of the communication device.

In one example, the communication device performs at least one subsequent operation for a paging, when (e.g., if) the paging record list and/or the at least one paging record list comprise(s) the ID of the communication device. In one example, the communication device performs the at least one subsequent operation for the paging, when (e.g., if) the paging record list comprises the ID of the communication device. In one example, the communication device performs the at least one subsequent operation for the paging, when (e.g., if) the at least one paging record list comprises the ID of the communication device. In one example, the at least one subsequent operation for the paging is defined by a communication standard (e.g., the 3rd Generation Partnership Project (3GPP) standard).

In one example, the EPR configuration further comprises a first state indicator (e.g., a network energy savings paging (NES-P) indicator) indicating an initial state of the EPR configuration. In one example, the communication device determines whether to apply the EPR configuration (e.g., whether to perform the Steps 304, 306 and 308 in the process 30) according to the initial state. For example, the communication device applies the EPR configuration in response to the initial state being an active state. For example, the communication device disables applying the EPR configuration in response to the initial state being a deactivate state. In one example, the communication device stores the EPR configuration in response to the initial state of the EPR configuration being the deactivate state.

In one example, the communication device receives a second state indicator (e.g., a NES-P indicator) for the EPR configuration from the network, to activate or deactivate the EPR configuration. For example, the communication device activates and applies the EPR configuration, after receiving the second state indicator which indicates the active state. For example, the communication device deactivates and disables applying the EPR configuration, after receiving the second state indicator which indicates the deactivate state. In one example, the communication device performs a legacy (or normal) paging, after receiving the second state indicator which indicates the deactivate state. In one example, at least one of the at least one paging DCI, the at least one first PM and system information comprises the second state indicator.

In one example, the communication device receives barring information (e.g., a NES-P allowing bit) from the network. In one example, the barring information indicates whether a cell of the network supports a NES-P. In one example, a master information block (MIB) or a system information block type 1 (SIB1) comprises the barring information. In one example, the communication device which supports the NES-P is able to camp on the cell in response to the barring information indicating the cell supports the NES-P. In one example, the communication device which does not support the NES-P is not able to camp on the cell in response to the barring information indicating the cell supports the NES-P.

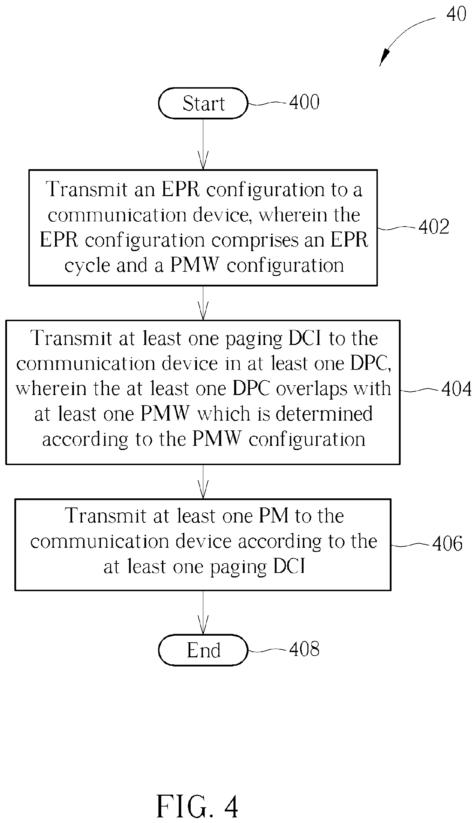

FIG. 4 is a flowchart of a process 40 according to an example of the present invention. The process 40 may be utilized in a network (e.g., a network 14 in FIG. 1 or the communication device 20 in FIG. 2), to handle paging transmissions. The process 40 may be compiled into the program codes 214 and includes the following steps:

Step 400: Start.
Step 402: Transmit an EPR configuration to a communication device, wherein the EPR configuration comprises an EPR cycle and a PMW configuration.

(continued)

Step 404: Transmit at least one paging DCI to the communication device in at least one DPC, wherein the at least one DPC overlaps with at least one PMW which is determined according to the PMW configuration.

Step 406: Transmit at least one PM to the communication device according to the at least one paging DCI.

Step 408: End.

According to the process 40, the network transmits an EPR configuration to a communication device. The EPR configuration comprises an EPR cycle and a PMW configuration. The network transmits at least one paging DCI to the communication device in at least one DPC. The at least one DPC (e.g., partially or completely) overlaps with at least one PMW which is determined according to the PMW configuration. The network transmits at least one PM to the communication device according to the at least one paging DCI. That is, the network transmits the at least one paging DCI in the specific DPC(s). Thus, energy of the network can be saved.

Realization of the process 40 is not limited to the above description. The following examples may be applied to realize the process 40.

In one example, the EPR cycle corresponds to an EPR. In one example, the EPR comprises a plurality of radio frames (RFs). In one example, the plurality of RFs comprise one or more paging frames (PFs). In one example, the EPR comprises a starting point of a PF. In one example, a PMW (e.g., one of the at least one PMW) comprises at least one first PF. In one example, the network generates the EPR configuration, before transmitting the EPR configuration to the communication device.

In one example, the PMW configuration comprises time location information. In one example, the time location information comprises a starting point and a length for the PMW. That is, the network configures the time location information in the PMW configuration, and the communication device determines the at least one PMW in the EPR cycle according to the time location information. In one example, a starting point of a DPC (e.g., one of the at least one DPC) overlaps with a PMW (e.g., one of the at least one PMW). In one example, a starting point of a DPC (e.g., one of the at least one DPC) is a 1st starting point of a DPC within a PMW (e.g., one of the at least one PMW).

In one example, the EPR cycle is a multiple of a DPC. In one example, the PMW configuration comprises a PMW indicator indicating at least one DPC. That is, the network configures the at least one DPC in the EPR cycle as the at least one PMW. In one example, the PMW indicator comprises at least one of an index number and a bit map. In one example, the index number indicates the at least one DPC. In one example, the bit map comprises a plurality of bits. In one example, the plurality of bits corresponds to a plurality of DPCs in the EPR cycle, respectively. In one example, a bit with a first value (e.g., 1) in the bit map represents that a corresponding DPC is a PMW. In one example, a bit with a second value (e.g., 0) in the bit map represents that a corresponding DPC is not a PMW.

In one example, the network transmits at least one EPR cycle parameter to the communication device. The at least one EPR cycle parameter may be comprised in the EPR configuration. In one example, the index number is determined (e.g., by the communication device) according to the at least one EPR cycle parameter.

In one example, the PMW configuration comprises a coefficient. In one example, the at least one first PF in the EPR cycle is determined (e.g., by the communication device) as a PMW according to an equation related to the coefficient. The equation can be referred to the equation (4) in the examples for the process 30, and not narrated herein for brevity.

In one example, the network configures an updated number of PFs in a DPC. In one example, the updated number is smaller than a number of PFs in the DPC. The number of PFs in the DPC can be referred to the equation (1) or the equation (4) in the examples for the process 30, and not narrated herein for brevity.

In one example, one of the at least one paging DCI comprises a short message and a first resource assignment of a PM (e.g., a default PM). In one example, the at least one first PM comprises the PM. In one example, the PM comprises at least one of a paging record list (e.g., a default paging record list), an extended paging record list, an additional paging record list, a first paging record list indicator for the extended paging record list, a second paging record list indicator for the additional paging record list and at least one second resource assignment of at least one second PM (e.g., additional PM(s)). In one example, the one of the at least one paging DCI comprises at least one of at least one second resource assignment of at least one second PM (e.g., additional PM(s)), the first paging record list indicator for an extended paging record list and the second paging record list indicator for the additional paging record list. In one example, the at least one first PM comprises the at least one second PM. In one example, the at least one second PM comprises at least one paging record list.

In one example, the short message comprises at least one of a system information change indicator and at least one emergency information indication. In one example, a paging record list (e.g., the default paging record list, the extended paging record list and/or the additional paging record list) corresponds to the communication device that needs to be paged by the network. In one example, the first paging record list indicator indicates that the PM comprises the extended paging record list. In one example, a maximum size of the extended paging record list is greater than that of the paging record list. In one example, the second paging record list indicator indicates that the PM comprises the additional paging record list. In one example, a maximum size of the additional paging record list is not smaller than that of the paging record list.

In one example, the network reaches the communication device (e.g., in an idle mode or in an inactive mode) through the PM. In one example, the network notifies the communication device (e.g., in the idle mode, in the inactive mode or in a connective mode) of at least one of a system information change indicator and at least one emergency information indication through the short message.

In one example, the EPR configuration further comprises a first state indicator (e.g., a NES-P indicator) indicating an initial state of the EPR configuration. In one example, the network transmits a second state indicator (e.g., a NES-P indicator) for the EPR configuration to the communication device, to activate or deactivate the EPR configuration. In one example, at least one of the at least one paging DCI, the at least one first PM and system information comprises the second state indicator.

In one example, the network transmits barring information (e.g., a NES-P allowing bit) to the communication device. In one example, the barring information indicates whether a cell of the network supports a NES-P. In one example, an MIB or an SIB1 comprises the barring information. In one example, the network distinguishes whether the communication device support the NES-P.

The examples in the process 30 may be applied to the process 40, and are not narrated herein for brevity.

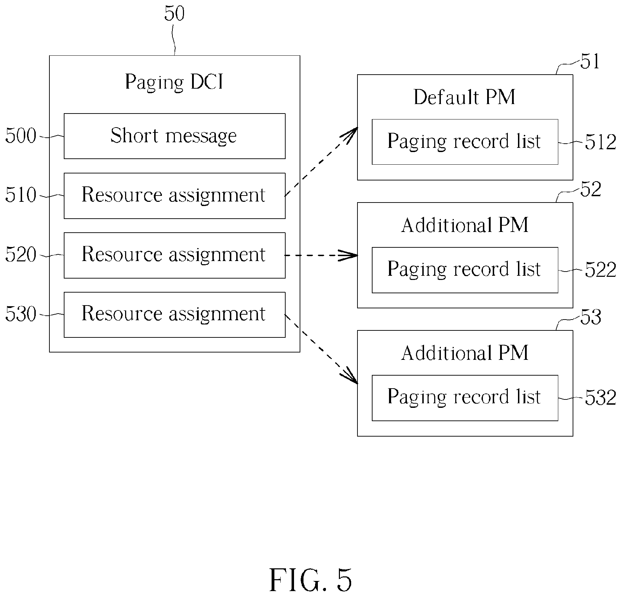

FIG. 5 is a schematic diagram of a paging DCI 50 according to an example of the present invention. The paging DCI 50 comprises a short message 500, a resource assignment 510 of a default PM 51 and a resource assignment 520 of an additional PM 52. The resource assignment 510 indicates a resource for a communication device to receive the default PM 51, and the default PM 51 comprises a paging record list 512. The resource assignment 520 indicates a resource for the communication device to receive the additional PM 52, and the additional PM 52 comprises a paging record list 522. The paging DCI 50 may further comprise a resource assignment 530 of an additional PM 53. The resource assignment 530 indicates a resource for the communication device to receive the additional PM 53, and the additional PM 53 comprises a paging record list 532.

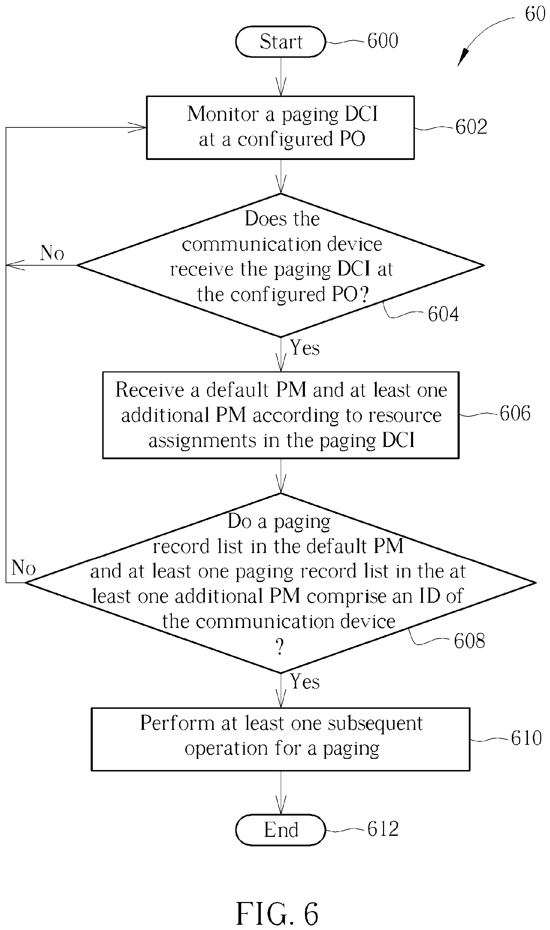

Please refer to FIG. 6 in conjunction with FIG 5. FIG. 6 is a flowchart of a process 60 according to an example of the present invention. The process 60 may be utilized in a communication device (e.g., a communication device 14 in FIG. 1 or the communication device 20 in FIG. 2), to receive and process a paging DCI. The process 60 may be compiled into the program codes 214 and includes the following steps:

Step 600:    Start.
Step 602:    Monitor a paging DCI at a configured PO.
Step 604:    Does the communication device receive the paging DCI at the configured PO? If yes, perform Step 606. If no, perform Step 602.
Step 606:    Receive a default PM and at least one additional PM according to resource assignments in the paging DCI.
Step 608:    Do a paging record list in the default PM and at least one paging record list in the at least one additional PM comprise an ID of the communication device? If yes, perform Step 610. If no, perform Step 602.
Step 610:    Perform at least one subsequent operation for a paging.
Step 612:    End.

In the process 60, the communication device assigns at least one resource for the at least one additional PM according to the paging DCI.

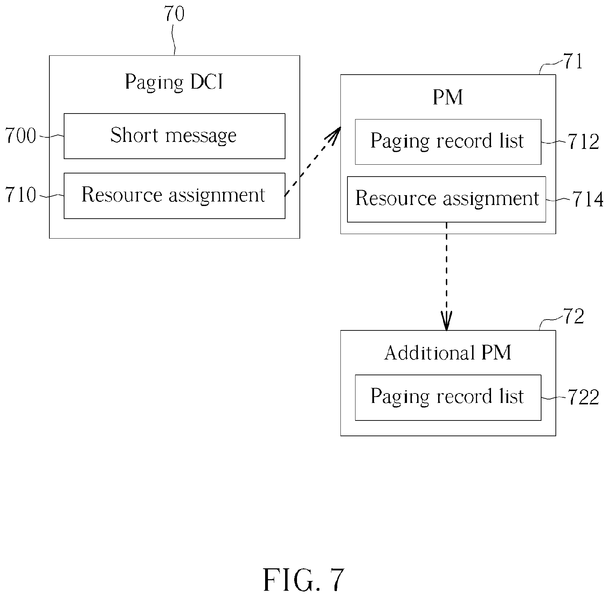

FIG. 7 is a schematic diagram of a paging DCI 70 according to an example of the present invention. The paging DCI 70 comprises a short message 700 and a resource assignment 710 of a PM 71. The resource assignment 710 indicates a resource for a communication device to receive the PM 71, and the PM 71 comprises a paging record list 712 and a resource assignment 714 of an additional PM 72. The resource assignment 714 indicates a resource for a communication device to receive the additional PM 72, and the additional PM 72 comprises a paging record list 722.

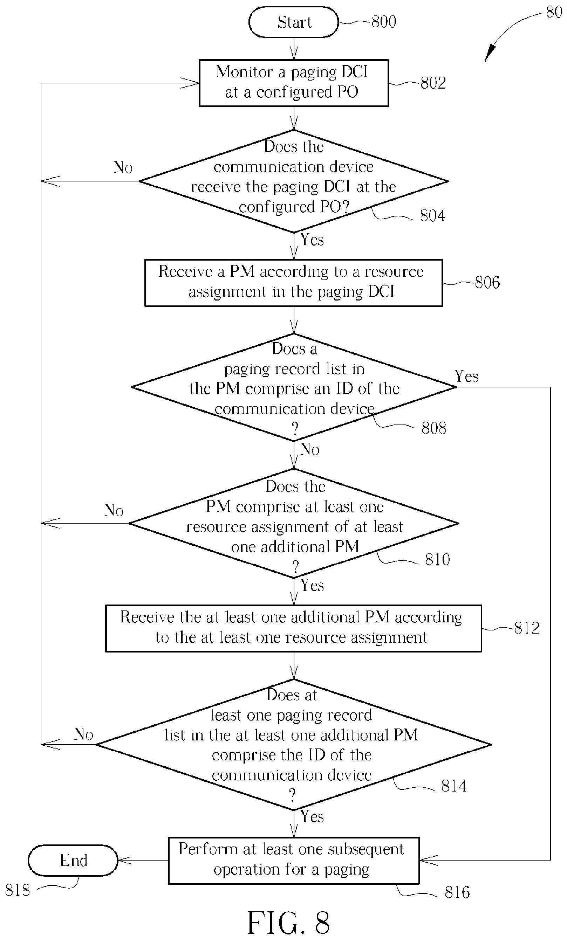

Please refer to FIG. 8 in conjunction with FIG 7. FIG. 8 is a flowchart of a process 80 according to an example of the present invention. The process 80 may be utilized in a communication device (e.g., a communication device 14 in FIG. 1 or the communication device 20 in FIG. 2), to receive and process a paging DCI. The process 80 may be compiled into the program codes 214 and includes the following steps:

Step 800:    Start.
Step 802:    Monitor a paging DCI at a configured PO.

(continued)

Step 804: Does the communication device receive the paging DCI at the configured PO? If yes, perform Step 806. If no, perform Step 802.

Step 806: Receive a PM according to a resource assignment in the paging DCI.

Step 808: Does a paging record list in the PM comprise an ID of the communication device? If yes, perform Step 816. If no, perform Step 810.

Step 810: Does the PM comprise at least one resource assignment of at least one additional PM? If yes, perform Step 812. If no, perform Step 802.

Step 812: Receive the at least one additional PM according to the at least one resource assignment.

Step 814: Does at least one paging record list in the at least one additional PM comprise the ID of the communication device? If yes, perform Step 816. If no, perform Step 802.

Step 816: Perform at least one subsequent operation for a paging.

Step 818: End.

In the process 80, the communication device assigns at least one resource for the at least one additional PM according to the PM.

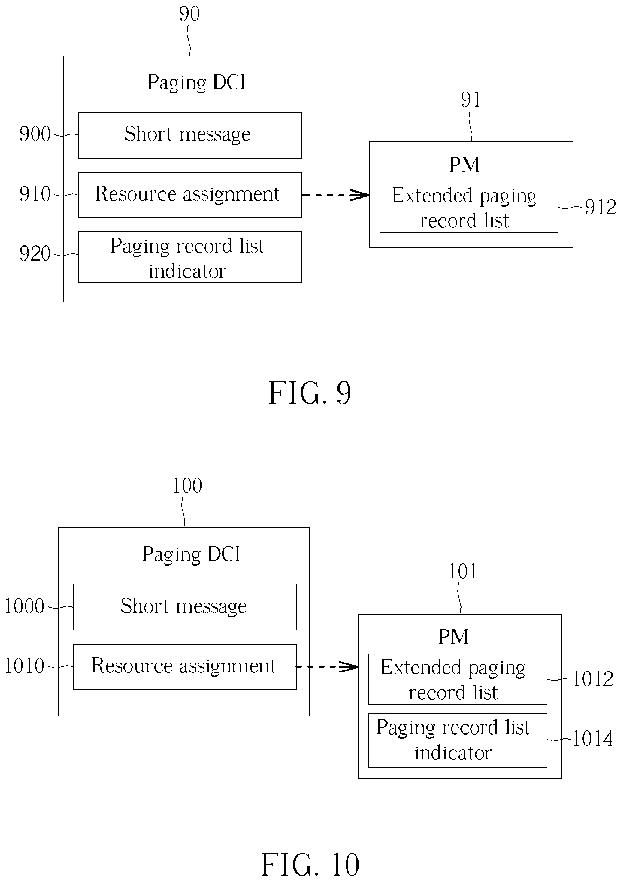

FIG. 9 is a schematic diagram of a paging DCI 90 according to an example of the present invention. The paging DCI 90 comprises a short message 900, a resource assignment 910 of a PM 91 and a paging record list indicator 920 for an extended paging record list 912. The resource assignment 910 indicates a resource for a communication device to receive the PM 91, and the paging record list indicator 920 indicates the extended paging record list 912. The PM 91 comprises the extended paging record list 912.

FIG. 10 is a schematic diagram of a paging DCI 100 according to an example of the present invention. The paging DCI 100 comprises a short message 1000 and a resource assignment 1010 of a PM 101. The resource assignment 1010 indicates a resource for a communication device to receive the PM 101, and the PM 101 comprises an extended paging record list 1012 and a paging record list indicator 1014 for the extended paging record list 1012. The paging record list indicator 1014 indicates the extended paging record list 1012.

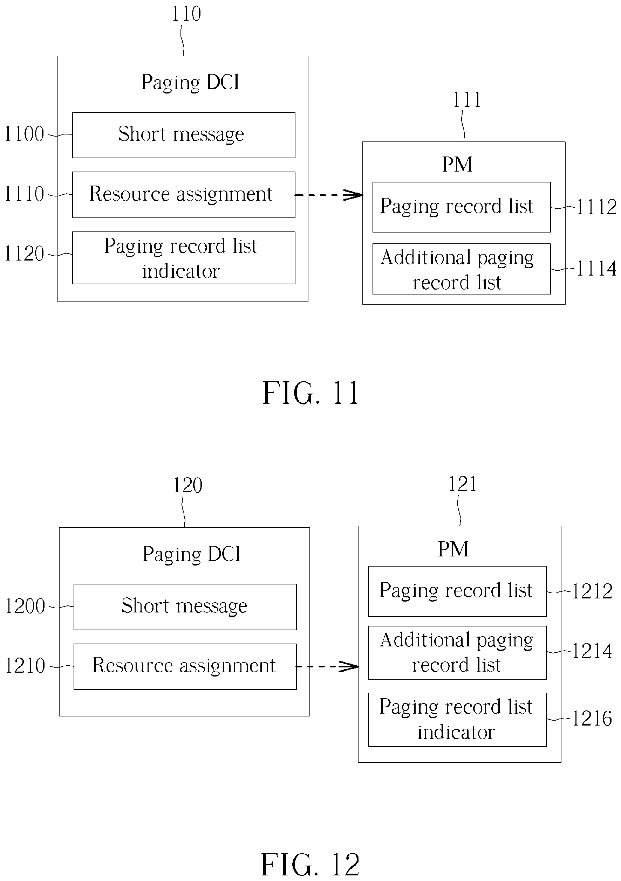

FIG. 11 is a schematic diagram of a paging DCI 110 according to an example of the present invention. The paging DCI 110 comprises a short message 1100, a resource assignment 1110 of a PM 111 and a paging record list indicator 1120 for an additional paging record list 1114. The resource assignment 1110 indicates a resource for a communication device to receive the PM 111, and the paging record list indicator 1120 indicates the additional paging record list 1114. The PM 111 comprises a (e.g., default) paging record list 1112 and the additional paging record list 1114.

FIG. 12 is a schematic diagram of a paging DCI 120 according to an example of the present invention. The paging DCI 120 comprises a short message 1200 and a resource assignment 1210 of a PM 101. The resource assignment 1210 indicates a resource for a communication device to receive the PM 121, and the PM 121 comprises a paging record list 1212, an additional paging record list 1214 and a paging record list indicator 1216 for the additional paging record list 1214. The paging record list indicator 1216 indicates the additional paging record list 1214.

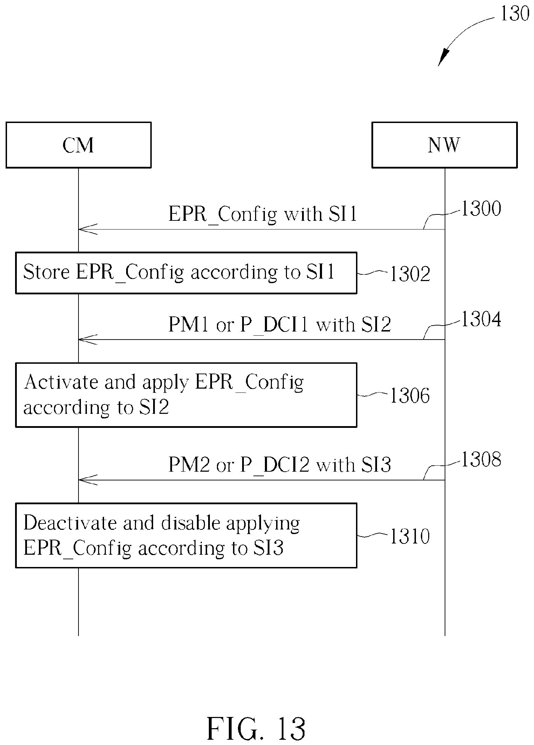

FIG. 13 is a sequence diagram of a process 130 according to an example of the present invention. There are a communication device CM and a network NW for handling paging transmissions in FIG. 13. In Step 1300, the communication device CM receives an EPR configuration EPR_Config with a state indicator SI1 (e.g., the first state indicator in the examples for the process 30) from the network NW, wherein the state indicator SI1 indicates that an initial state of the EPR configuration EPR_Config is a deactivate state. In Step 1302, the communication device CM stores the EPR configuration EPR_Config according to the state indicator SI1. In Step 1304, the communication device CM receives a PM PM1 or a paging DCI P_DCI1 with a state indicator SI2 (e.g., the second state indicator in the examples for the process 30) from the network NW, wherein the state indicator SI2 indicates an active state. In Step 1306, the communication device CM activates and applies the EPR configuration EPR_Config according to the state indicator SI2. In Step 1308, the communication device CM receives a PM PM2 or a paging DCI P_DCI2 with a state indicator SI3 (e.g., the second state indicator in the examples for the process 30) from the network NW, wherein the state indicator SI3 indicates the deactivate state. In Step 1310, the communication device CM deactivates and disables applying the EPR configuration EPR_Config according to the state indicator SI3. In the process 130, the communication device obtains a state indicator through a PM or a paging DCI.

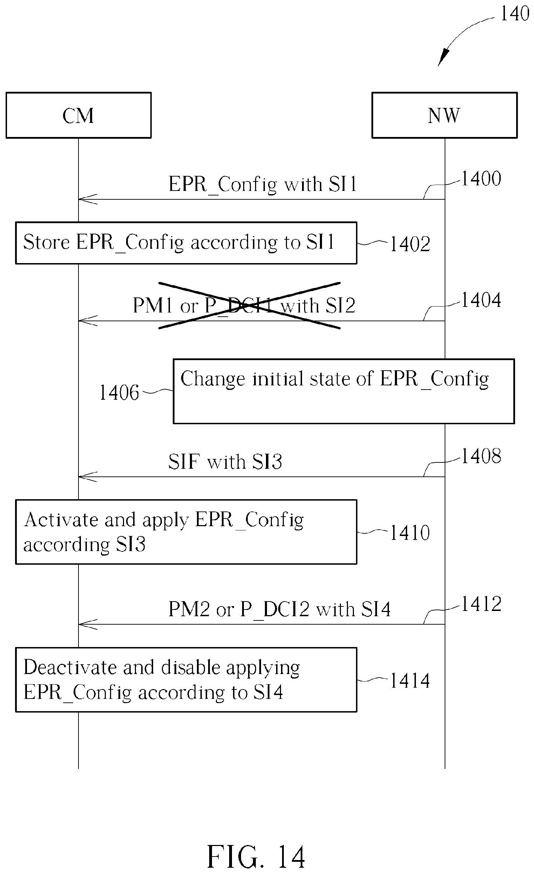

FIG. 14 is a sequence diagram of a process 140 according to an example of the present invention. There are a communication device CM and a network NW for handling paging transmissions in FIG. 14. In Step 1400, the communication device CM receives an EPR configuration EPR_Config with a state indicator SI1 (e.g., the first state indicator in the examples for the process 30) from the network NW, wherein the state indicator SI1 indicates that an initial state of the EPR configuration EPR_Config is a deactivate state. In Step 1402, the communication device CM stores the EPR configuration EPR_Config according to the state indicator SI1. In Step 1404, the network NW transmits a PM PM1 or a paging DCI P_DCI1 with a state indicator SI2 to the communication device CM, but the communication device CM does not (e.g., successfully) receives the PM PM1 or the paging DCI P_DCI1. The state indicator SI2 indicates an active state. In Step 1406, the network NW changes the initial state of the EPR configuration EPR_Config. In Step 1408, the communication device CM receives system information SIF with a state indicator SI3 from the network NW, wherein the state indicator SI3 indicates the active state. In Step 1410, the communication device CM activates and applies the EPR configuration EPR_Config according to the state indicator SI3. In Step 1412, the communication device CM receives a PM PM2 or a paging DCI P_DCI2 with a state indicator SI4 from the network NW, wherein the state indicator SI4 indicates the deactivate state. In Step 1414, the communication device CM deactivates and disables applying the EPR configuration EPR_Config according to the state indicator SI4. In the process 140, the communication device obtains a state indicator through the system information in response to the network changing the initial state of the EPR configuration.

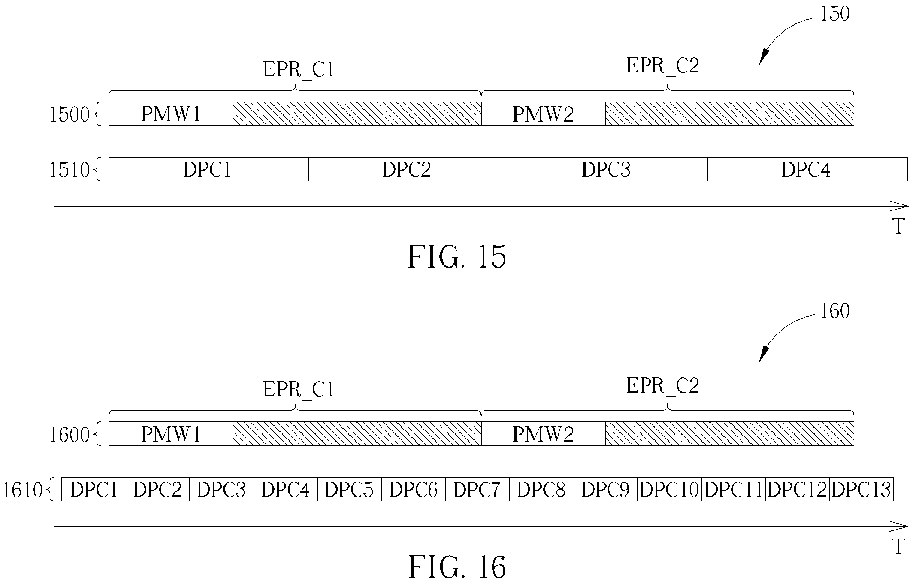

FIG. 15 is a schematic diagram of a relation 150 between a DPC and a PMW according to an example of the present invention. In FIG. 15, a horizontal axis represents a time domain T. RFs 1500 for a communication device are grouped into EPC cycles EPR_C1-EPR_C2, and RFs 1510 for a network are grouped into DPCs DPC1-DPC4. A length of a PMW is smaller than that of a DPC. The EPC cycle EPR_C1 comprises a PMW PMW1 for the communication device to monitor a paging DCI. The communication device may enter an idle mode or an inactive mode in other RFs (shown as a slash block) within the EPC cycle EPR_C1. The EPC cycle EPR_C2 can be referred to the EPC cycle EPR_C1, and not narrated herein for brevity.

In FIG. 15, the network pages communication device(s) in the DPC DPC1, since a starting point of the DPC DPC1 overlaps with the PMW PMW1. The network disables paging the communication device(s) in the DPC DPC2, since a starting point of the DPC DPC2 does not overlap with the PMWs PMW1 and PMW2. The network pages the communication device(s) in the DPC DPC3, since a starting point of the DPC DPC3 overlaps with the PMW PMW2. The network disables paging the communication device(s) in the DPC DPC4, since a starting point of the DPC DPC4 does not overlap with the PMWs PMW1 and PMW2. Accordingly, the network may enter an idle mode or an inactive mode in the DPCs DCP2 and DCP4.

FIG. 16 is a schematic diagram of a relation 160 between a DPC and a PMW according to an example of the present invention. In FIG. 16, a horizontal axis represents a time domain T. RFs 1600 for a communication device are grouped into EPC cycles EPR_C1-EPR_C2, and RFs 1610 for a network are grouped into DPCs DPC1-DPC13. A length of a PMW is greater than that of a DPC. The EPC cycle EPR_C1 comprises a PMW PMW1 for the communication device to monitor a paging DCI. The communication device may enter an idle mode or an inactive mode in other RFs (shown as a slash block) within the EPC cycle EPR_C1. The EPC cycle EPR_C2 can be referred to the EPC cycle EPR_C1, and not narrated herein for brevity.

In FIG. 16, the network pages communication device(s) in the DPC DPC2, since a starting point of the DPC DPC2 is a 1st starting point of a DPC within the PMW PMW 1. The network pages the communication device(s) in the DPC DPC8, since a starting point of the DPC DPC2 is a 1st starting point of a DPC within the PMW PMW1. The network disables paging the communication device(s) in the DPCs DPC1, DPC3-DPC7 and DPC9-DPC13, since a starting point of each of the DPCs DPC1, DPC3-DPC7 and DPC9-DPC13 is neither a 1st starting point of a DPC within the PMW PMW1 nor a 1st starting point of a DPC within the PMW PMW2. Accordingly, the network may enter an idle mode or an inactive mode in the DPCs DPC1, DPC3-DPC7 and DPC9-DPC13.

The terms of "first" and "second" described above are used to distinguish the relevant statements, and do not limit the order of the relevant statements. The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if" or "since" described above may be replaced by "in response to".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and a communication device for handling paging transmissions. The communication device determines a PMW(s) according to an EPR configuration transmitted by a network, and performs the paging transmissions according to a PMW(s) instead of a DPC(s). The network performs the paging transmissions according to a specific DPC(s) associated with the PMW(s). Thus, the problem of handling paging transmissions to save energy can be solved.

**Claims**

1. A method for a communication device (14, 20) handling paging transmissions, **characterized by**:

   receiving an enhanced paging region, EPR, configuration from a network (12, 20), wherein the EPR configuration comprises an EPR cycle and a paging monitor window, PMW, configuration (302);
   determining at least one PMW in the EPR cycle according to the PMW configuration (304);
   receiving at least one paging downlink, DL, control information, DCI, from the network (12, 20) in the at least one PMW (306); and
   receiving at least one first paging message, PM, from the network (12, 20) according to the at least one paging DCI (308).

2. The method of claim 1, **characterized in that** the PMW configuration comprises time location information; or the time location information comprises a starting point and a length for the PMW.

3. The method of claim 2, **characterized in that** the step of determining the at least one PMW in the EPR cycle according to the PMW configuration comprises:
   determining the at least one PMW in the EPR cycle according to the time location information.

4. The method of claim 1, **characterized in that** the PMW configuration comprises a PMW indicator indicating at least one default paging cycle.

5. The method of claim 4, **characterized in that** the step of determining the at least one PMW in the EPR cycle according to the PMW configuration comprises:
   determining the at least one default paging cycle in the EPR cycle as the at least one PMW according to the PMW indicator.

6. The method of claim 4, **characterized in that** the PMW indicator comprises at least one of an index number and a bit map; the bit map comprises a plurality of bits; or the plurality of bits corresponds to a plurality of default paging cycles in the EPR cycle, respectively.

7. The method of claim 1, **characterized in that** the PMW configuration comprises a coefficient.

8. The method of claim 7, **characterized in that** the step of determining the at least one PMW in the EPR cycle according to the PMW configuration comprises:

   determining at least one paging frame, PF, in the EPR cycle as a PMW according to the following equation:

$$(SFN + offset) \bmod (m \times T) = (T \operatorname{div} N) \times (ID_{CD} \bmod N)$$

   wherein *SFN* is an index of an RF, *offset* is an offset for a PMW, m is the coefficient, *T* is a number of radio frames, RFs, in a default paging cycle, *N* is a number of PFs in the default paging cycle and $ID_{CD}$ is an ID of the communication device (14, 20).

9. The method of claim 1, **characterized in that** one of the at least one paging DCI comprises a short message and a first resource assignment of a PM; or the PM comprises at least one of a paging record list, an extended paging record list, an additional paging record list, a first paging record list indicator for the extended paging record list, a second paging record list indicator for the additional paging record list and at least one second resource assignment of at least one second PM.

10. The method of claim 1, **characterized in that** one of the at least one paging DCI comprises at least one of at least one second resource assignment of at least one second PM, a first paging record list indicator for an extended paging record list and a second paging record list indicator for an additional paging record list; or the at least one second PM comprises at least one paging record list.

11. The method of claim 1, **characterized in that** the EPR configuration further comprises a first state indicator indicating an initial state of the EPR configuration.

12. The method of claim 11, **characterized in that** the method further comprises:
    determining whether to apply the EPR configuration according to the initial state.

13. The method of claim 1, **characterized in that** the method further comprises:

    receiving a second state indicator for the EPR configuration from the network (12, 20), to activate or deactivate the EPR configuration;
    wherein at least one of the at least one paging DCI, the at least one first PM and system information comprises the second state indicator.

14. A communication device (14, 20) for handling paging transmissions, **characterized by**:

    at least one storage device; and
    at least one processing circuit, coupled to the at least one storage device, wherein the at least one storage device is configured to store instructions, and the at least one processing circuit is configured to execute the instructions of:
    receiving an enhanced paging region, EPR, configuration from a network (12, 20), wherein the EPR configuration comprises an EPR cycle and a paging monitor window, PMW, configuration (302);
    determining at least one PMW in the EPR cycle according to the PMW configuration (304);
    receiving at least one paging downlink, DL, control information, DCI, from the network (12, 20) in the at least one PMW (306); and
    receiving at least one first paging message, PM, from the network (12, 20) according to the at least one paging DCI (308).

15. A method for a network (12, 20) handling paging transmissions, **characterized by**:

    transmitting an enhanced paging region, EPR, configuration to a communication device (14, 20), wherein the EPR configuration comprises an EPR cycle and a paging monitor window, PMW, configuration (402);
    transmitting at least one paging downlink, DL, control information, DCI, to the communication device (14, 20) in at least one default paging cycle, DPC, wherein the at least one DPC overlaps with at least one PMW which is determined according to the PMW configuration (404); and
    transmitting at least one first paging message, PM, to the communication device (14, 20) according to the at least one paging DCI (406).

FIG. 1

Communication device

Program codes

214

At least one
storage device

210

At least one
processing circuit

200

At least one
communication
interfacing device

220

20

FIG. 2

30

Start —300

Receive an EPR configuration from a network, wherein the EPR configuration comprises an EPR cycle and a PMW configuration —302

Determine at least one PMW in the EPR cycle according to the PMW configuration —304

Receive at least one paging DCI from the network in the at least one PMW —306

Receive at least one first PM from the network according to the at least one paging DCI —308

End —310

FIG. 3

40

Start — 400

Transmit an EPR configuration to a communication device, wherein the EPR configuration comprises an EPR cycle and a PMW configuration — 402

Transmit at least one paging DCI to the communication device in at least one DPC, wherein the at least one DPC overlaps with at least one PMW which is determined according to the PMW configuration — 404

Transmit at least one PM to the communication device according to the at least one paging DCI — 406

End — 408

FIG. 4

50

Paging DCI

500 — Short message

510 — Resource assignment

520 — Resource assignment

530 — Resource assignment

51

Default PM

Paging record list — 512

52

Additional PM

Paging record list — 522

53

Additional PM

Paging record list — 532

FIG. 5

60

Start —600

Monitor a paging DCI
at a configured PO —602

Does the
communication device
receive the paging DCI at
the configured PO? —604

No

Yes

Receive a default PM and at least one
additional PM according to resource
assignments in the paging DCI —606

Do a paging
record list in the default PM
and at least one paging record list in the at
least one additional PM comprise an ID of
the communication device
? —608

No

Yes

Perform at least one subsequent
operation for a paging —610

End —612

FIG. 6

70

Paging DCI

700 — Short message

710 — Resource assignment

71

PM

Paging record list — 712

Resource assignment — 714

72

Additional PM

Paging record list — 722

FIG. 7

FIG. 8

FIG. 9

FIG. 10

FIG. 11

FIG. 12

_130

| CM | | NW |
|----|---|-----|

EPR_Config with SI1 — 1300

Store EPR_Config according to SI1 — 1302

PM1 or P_DCI1 with SI2 — 1304

Activate and apply EPR_Config according to SI2 — 1306

PM2 or P_DCI2 with SI3 — 1308

Deactivate and disable applying EPR_Config according to SI3 — 1310

FIG. 13

140

| CM | NW |
|----|-----|

EPR_Config with SI1 — 1400

Store EPR_Config according to SI1 — 1402

~~PM1 or P_DCI1 with SI2~~ — 1404

1406 — Change initial state of EPR_Config

SIF with SI3 — 1408

Activate and apply EPR_Config according SI3 — 1410

PM2 or P_DCI2 with SI4 — 1412

Deactivate and disable applying EPR_Config according to SI4 — 1414

FIG. 14

EPR_C1

EPR_C2

150

1500 { | PMW1 | //// | PMW2 | //// |

1510 { | DPC1 | DPC2 | DPC3 | DPC4 |

T

## FIG. 15

EPR_C1

EPR_C2

160

1600 { | PMW1 | //// | PMW2 | //// |

1610 { | DPC1 | DPC2 | DPC3 | DPC4 | DPC5 | DPC6 | DPC7 | DPC8 | DPC9 | DPC10 | DPC11 | DPC12 | DPC13 |

T

## FIG. 16

EP 4 648 505 A1

**Europäisches Patentamt**
**European Patent Office**
**Office européen des brevets**

# EUROPEAN SEARCH REPORT

**Application Number**

EP 25 16 9117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 949 575 B1 (FG INNOVATION CO LTD [HK]) 24 January 2024 (2024-01-24) * paragraphs [0034], [0039], [0044], [0057], [0063], [0092] - [0095] * ----- | 1-15 | INV. H04W68/02 |
| A | WO 2017/133462 A1 (ZTE CORP [CN]) 10 August 2017 (2017-08-10) * pages 2-4 * * pages 8,9 * ----- | 1-15 | |
| A | INTEL CORPORATION: "Paging enhancement for NR-U", 3GPP DRAFT; R2-1903441 PAGING ENHANCEMENT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Xian, China; 20190408 - 20190412 6 April 2019 (2019-04-06), XP051700786, Retrieved from the Internet: URL:http://www.3gpp.org/ftp/Meetings%5F3GP P%5FSYNC/RAN2/Docs/R2%2D1903441%2Ezip [retrieved on 2019-04-06] * the whole document * ----- | 1-15 | |

**TECHNICAL FIELDS SEARCHED (IPC)**

H04W

The present search report has been drawn up for all claims

| Place of search | Date of completion of the search | Examiner |
|---|---|---|
| Berlin | 2 September 2025 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9117

This annex lists the patent family members relating to the patent documents cited in  the above-mentioned European search report.
The members are as contained in the European Patent Office EDP file on
The European Patent Office is in no way liable for these particulars which are merely given for the purpose of information.

02-09-2025

| Patent document cited in search report | | Publication date | Patent family member(s) | | Publication date |
|---|---|---|---|---|---|
| EP 3949575 | B1 | 24-01-2024 | CN | 113906795 A | 07-01-2022 |
| | | | EP | 3949575 A1 | 09-02-2022 |
| | | | JP | 7230236 B2 | 28-02-2023 |
| | | | JP | 2022529102 A | 17-06-2022 |
| | | | KR | 20210141677 A | 23-11-2021 |
| | | | US | 2020322918 A1 | 08-10-2020 |
| | | | US | 2022095270 A1 | 24-03-2022 |
| | | | WO | 2020200252 A1 | 08-10-2020 |
| WO 2017133462 | A1 | 10-08-2017 | CN | 107040994 A | 11-08-2017 |
| | | | WO | 2017133462 A1 | 10-08-2017 |

EPO FORM P0459

For more details about this annex : see Official Journal of the European Patent Office, No. 12/82